# EUROPEAN PATENT APPLICATION

(11) **EP 3 139 337 A1**
(43) Date of publication of application: **08.03.2017**
(21) Application number: 15785475.3
(22) Date of filing: 06.04.2015
(51) Int. Cl.: G06Q 50/10

(54) **VIRTUAL PADLOCK PROVIDING SYSTEM**

(30) Priority: 02.05.2014 KR 20140053264
(71) Applicant: Kim, Nam Gyun, Seoul 140-770 (KR); Park, Kyoung Jun, Seoul 135-270 (KR)
(72) Inventor: Kim, Nam Gyun, Seoul 140-770 (KR); Park, Kyoung Jun, Seoul 135-270 (KR)
(74) Representative: Grünecker Patent- und Rechtsanwälte PartG mbB
(86) International application number: PCT/KR2015/003421
(87) International publication number: WO 2015/167136

(57) **Abstract**

The present invention relates to a virtual padlock providing system, and provides, as a sign of love or friendship, etc., a virtual padlock in a form in which a user's name or alias, memos and photographs are displayed in accordance with the user's desired display conditions (such as the period of time for display, the day of week for display, and the time for display) on the screen of a display device installed at the user's desired attraction (such as a tourist spot, a cultural heritage site, a national park, etc.).

## Description

### [Technical Field]

The present invention relates to a virtual padlock providing system, and more particularly, to a virtual padlock providing system which provides a virtual padlock capable of being used by a user as a sign of love, friendship or the like and displayed on a display device installed at a famous place selected by the user.

### [Background Art]

Korean Patent Application No. KR10-2001-0100099 A discloses a technology related to a plate of an avowal of love for a couple or friends to write for a pledge of love or friendship thereof.

On the other hand, a padlock is used as a fastening device but may be used as a sign of love, friendship or the like to someone particular.

For example, people visiting famous places (such as a tourist attraction, a cultural heritage site, a national park and the like) may attach a padlock on which names or nicknames thereof and memos are written as a sign of love, friendship or the like to a padlock attachment place (such as a fence, a post or the like for attaching a padlock) installed at a corresponding famous place and may observe a padlock attachment day on anniversary for reminiscing love or friendship thereof.

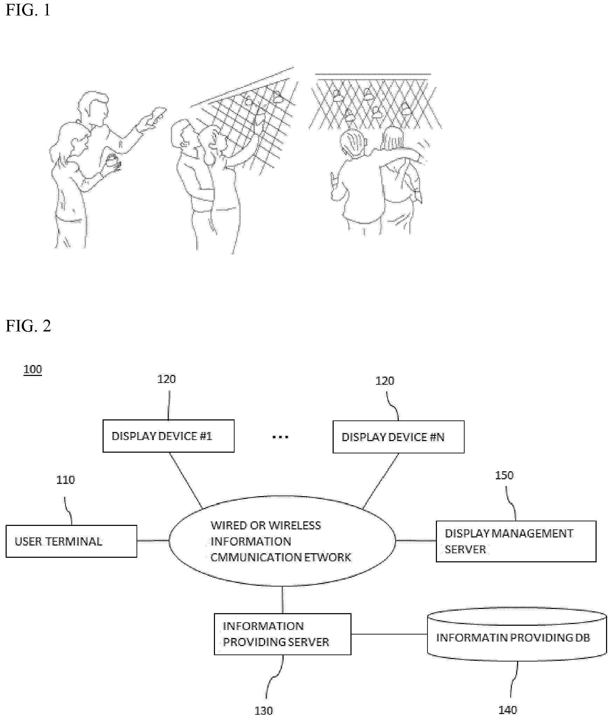

For reference, FIG. 1 is a view illustrating an example of a user attaching a padlock to a conventional fence for attaching a padlock.

However, when a padlock is attached to a padlock attachment place installed at a famous place as described above, the padlock formed using steel rusts as time passes, which may ruin the appearance of the corresponding famous place and become environmental pollutants.

Also, with increasing number of padlocks attached to a padlock attachment place installed at a famous place, competition for attaching padlocks becomes severe in such a way that people may argue or even an accident may occur, in which someone is hurt while trying to attach a padlock to a dangerous place that is not a designated padlock attachment place.

To solve a problem of steel padlocks used as described above, the number of people attaching padlocks formed of rubber, silicone, or synthetic resin, instead of steel padlocks, to padlock attachment places installed at famous places as a sign of love, friendship, pledge and the like has increased.

However, in this case, as the number of padlocks formed of rubber, silicone, or synthetic resin increases, the padlocks may ruin the appearance of the corresponding famous place and may become a source of environmental pollutants.

### [Disclosure of Invention]

### [Technical Problem]

The present invention provides a virtual padlock providing system which provides a virtual padlock in a form in which a name, a nickname, a memo, and a picture of a user according to a display condition (for example, a display period, a display day of the week, and a display time) selected by the users is provided as a sign of love, friendship or the like on a screen of a display device installed at a famous place (for example, a tourist attraction, a cultural heritage site, a national park and the like) selected by the user.

### [Technical Solution]

One aspect of the present invention provides a virtual padlock providing system including a user terminal used as an input device for selecting a virtual padlock, a display device displaying the virtual padlock, and a display condition for the virtual padlock, the display device installed at a famous place, selected by a user of the user terminal, and configured to display a virtual padlock selected by the user on a screen according to a display condition selected by the user, an information providing server capable of communicating with the user terminal through a wired or wireless information communication network (for example, wired Internet, wireless Internet or the like) and determining the virtual padlock, the display device, and the display condition selected by the user through a virtual padlock selection screen, a display device selection screen, and a display condition selection screen to be user display information, storing the user display information in an information providing database (DB) and transferring the user display information to a display management server when a selection request or a correction request with respect to the padlock, the display device, and the display condition is received from the user terminal, the information providing DB in which one or more virtual padlocks provided through the virtual padlock selection screen and one or more display devices provided through the display device selection screen are stored and the user display information is stored, and the display management server capable of communicating with the display device or the information providing server through a wired or wireless information communication network (for example, wired Internet, wireless Internet or the like) and allowing the virtual padlock selected by the user to be displayed on the screen of the display device selected by the user according to the display condition selected by the user, when the user display information is received from the information providing server.

### [Advantageous Effects]

When a virtual padlock according to the embodiment of the present invention described above is used, a problem in which padlocks attached to a general padlock attachment place (for example, a fence, a post or the like for attaching padlocks) spoil the appearance of a corresponding famous place and become environmental pollutants may be completely solved. Particularly, a virtual padlock is displayed at not only famous places where a user has visited in person but also at famous places where a user would like to visit or at famous places whose planned date of visiting is determined, thereby allowing the user to reminisce or celebrate love or friendship of their own.

### [Brief Description of Drawings]

FIG. 1 is a view illustrating an example of a user attaching a padlock to a conventional fence for attaching a padlock.
FIG. 2 is a block diagram illustrating a configuration of a virtual padlock providing system according to an embodiment of the present invention.
FIG. 3 illustrates a first embodiment of a virtual padlock selection screen according to the present invention.
FIG. 4 illustrates a second embodiment of a virtual padlock selection screen according to the present invention.
FIG. 5 illustrates a third embodiment of a virtual padlock selection screen according to the present invention.
FIG. 6 illustrates a fourth embodiment of a virtual padlock selection screen according to the present invention.
FIG. 7 illustrates a first embodiment of a display device selection screen according to the present invention.
FIG. 8 illustrates a second embodiment of a display device selection screen according to the present invention.
FIG. 9 illustrates a third embodiment of a display device selection screen according to the present invention.
FIG. 10 illustrates a fourth embodiment of a display device selection screen according to the present invention.
FIG. 11 illustrates an embodiment of a display condition selection screen according to the present invention.

### [Best Mode]

Hereinafter, embodiments of the present disclosure will be described in detail with reference to the attached drawings.

Referring to FIG. 2, a virtual padlock providing system 100 according to an embodiment of the present invention includes a user terminal 110, a display device 120, an information providing server 130, an information providing database (DB) 140, and a display management server 150.

The user terminal 110 is used as an input device for selecting a virtual padlock, the display device 120 which displays the virtual padlock, and display conditions (for example, a display period, a display day of the week, and a display time).

As the user terminal 110, a mobile communication device (for example, a smart phone, a tablet personal computer (PC), a laptop PC, and the like), a PC, an unattended information terminal such as a kiosk, or the like may be used.

The display device 120 is installed at a famous place (for example, a tourist attraction, a cultural heritage site, a national park, and the like), is selected by a user of the user terminal 110, and displays the virtual padlock selected by the user according to a display condition selected by the user.

The information providing server 130 may communicate with the user terminal 110 through a wired or wireless information communication network (for example, wired Internet, wireless Internet, and the like).

When a selection request or a correction request with respect to the virtual padlock, the display device 120 which displays the virtual padlock, and the display condition of the virtual padlock is received from the user terminal 110, the information providing server 130 determines the virtual padlock, the display device 120, and the display condition selected by the user through a virtual padlock selection screen, a display device selection screen, and a display condition selection screen displayed on the user terminal 110 as user display information, stores the user display information in the information providing DB 140, and transfers the user display information to the display management server 150.

The virtual padlock selection screen may be diversely configured as any one available to search for and select a virtual padlock having the form including one or more of a name, a memo, and a picture of the user.

The display device selection screen may be diversely configured in any form for searching for a famous place for each country or city to search for and selecting the display device 120 installed at the corresponding famous place or as any form for searching for and selecting the display device 120 installed at a corresponding famous place through searching for a famous place regardless of country or city.

The display condition selection screen may be diversely configured in any form for selecting one or more of display period, display day of the week, and display time.

The information providing DB 140 stores one or more virtual padlocks provided through the virtual padlock selection screen and one or more display devices 120 provided through the display device selection screen and stores the user display information.

The display management server 150 may communicate with the display device 120 or the information providing server 130 through a wired or wireless information communication network (for example, wired Internet, wireless Internet, and the like) and display a virtual padlock selected by the user on a screen of the display device 120 selected by the user, according to the display condition selected by the user, when the user display information is received from the information providing server 130.

The virtual padlock providing system 100 in accordance with the present invention configured as described above operates as follows.

According to the embodiment of the present invention, the user may receive virtual padlock providing services according the present invention by accessing the information providing server 130 using the user terminal 110.

The user of the present invention may use the virtual padlock providing paid services by signing up for a membership and logging in through a wired or wireless Internet homepage managed for the virtual padlock providing services by the information providing server 130, and even a non-member user may use the virtual padlock providing services according to the present invention through self authentication, for paid services.

In the technical field of wired or wireless Internet services such as the virtual padlock providing services according to the present invention, an authentication technology of checking membership information, a method of signing up for a membership for giving an identifier and a password and logging-in, checking personal information of a non-member user, using a financial transaction certificate, and the like and an interworking technology with a financial payment server operated by a financial institution for paid services may be easily understood by one of ordinary skill in the art and diversely embodied even though embodiments thereof are not described.

According to the embodiment of the present invention, the user may access the information providing server 130 using the user terminal 110 and may select a virtual padlock and a display condition to be displayed on the display device 120 installed at a famous place where the user currently visits as a sign for his or her love, friendship, or the like with respect to the corresponding famous place, thereby displaying the virtual padlock on the corresponding display device 120. In this case, the user may not only celebrate his or her own love, friendship, or the like by looking at the virtual padlock currently displayed at the corresponding famous place according to the selected display condition but also reminisce about or celebrate the virtual padlock displayed at the corresponding famous place at any time in the future.

Unlike this, the user may access the information providing server 130 using the user terminal 110 and may select a virtual padlock and a display condition to be displayed on the display device 120 installed at a famous place that the user visited in the past as a sign for his or her love, friendship, or the like with respect to the corresponding famous place, thereby displaying the virtual padlock on the corresponding display device 120. In this case, the user may reminisce about or celebrate his or her own love, friendship, or the like through the virtual padlock displayed at the corresponding famous place according to the selected display condition.

Unlike this, the user may access the information providing server 130 using the user terminal 110 and may select a virtual padlock and a display condition to be displayed on the display device 120 installed at a famous place that the user has not visited in person but wants to visit some day in the future as a sign for his or her love, friendship, or the like with respect to the corresponding famous place, thereby displaying the virtual padlock on the corresponding display device 120. In this case, the user may visit the corresponding famous place some day in the future and reminisce about or celebrate his or her own love, friendship, or the like through the virtual padlock displayed at the corresponding famous place according to the predetermined display condition.

Unlike this, the user may access the information providing server 130 using the user terminal 110 and may select a virtual padlock and a display condition to be displayed on the display device 120 installed at a famous place that the user has not visited in person but is expected to be visited on a visiting-expected date determined as some day in the future as a sign for his or her love, friendship, or the like with respect to the corresponding famous place, thereby displaying the virtual padlock on the corresponding display device 120. In this case, the user may visit the corresponding famous place on the visiting-expected data in the future and reminisce about or celebrate his or her own love, friendship, or the like through the virtual padlock displayed at the corresponding famous place according to the predetermined display condition.

A process in which the user accesses the information providing server 130 and selects the virtual padlock, the display device 120, and the display condition using the user terminal 110 as described above will be described as follows.

First, the user accesses the information providing server 130 and makes a selection request or a correction request with respect to the display device 120 and the display condition using the user terminal 110. For reference, the information providing server 130 is requested to perform the correction request when the selection request is performed in advance and the virtual padlock, the display device 120, and the display condition are already selected by the user.

Accordingly, the information providing server 130 displays the virtual padlock selection screen, the display device selection screen, and the display condition selection screen on the user terminal 110.

Here, the virtual padlock selection screen, the display device selection screen, and the display condition selection screen may be displayed in or out of order. In any case, when a selection of the user is completed through a selection screen, a next screen may be displayed.

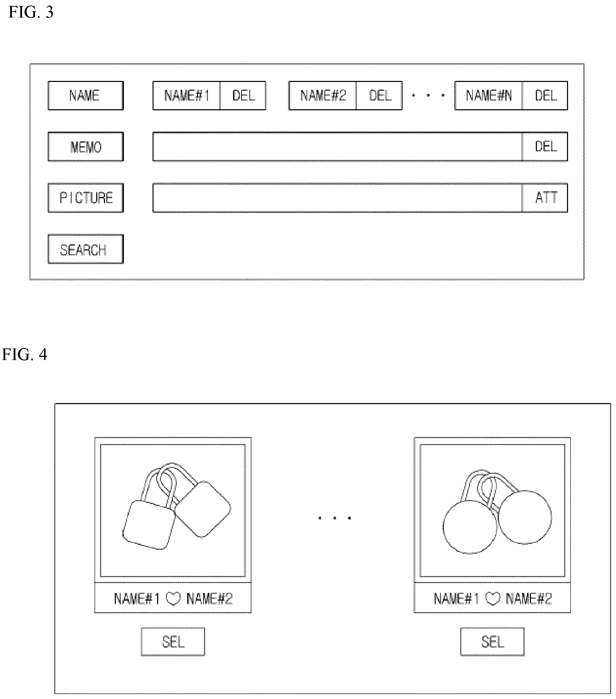

Hereinafter, referring to FIGS. 3 to 11, an example in which the virtual padlock selection screen is displayed first and the display device selection screen and the display condition selection screen are sequentially displayed next will be described.

A touch screen including touchable soft buttons is shown in FIGS. 3 to 11. In the case of a PC which does not use a touch screen monitor, the soft buttons displayed on a screen may be selected by operating a mouse or a keyboard.

FIG. 3 illustrates a first embodiment of a virtual padlock selection screen according to the present invention, which is a virtual padlock search screen including a name addition button NAME for displaying a name input window through which the user may input a name, a memo button MEMO for displaying a memo input window through which the user inputs a memo, a picture attachment button PICTURE for displaying a picture attachment window through which the user attaches a picture, and a search button SEARCH for requesting a virtual padlock list.

FIGS. 4 to 6 illustrate second to fourth embodiments of a virtual padlock selection screen according to the present invention, which is a virtual padlock selection list screens displayed as search results through the search screen of FIG. 3 and includes the virtual padlock list including the selection button SEL through which the user may select the virtual padlock.

For reference, pictures of samples of the virtual padlock shown in FIGS. 4 to 6 are sample pictures of so-called virtual love locks for pledging or celebrating love between a man and a woman.

The user may search for and select a virtual padlock having a form including one or more of the name, memo, and picture of the user through the search screen of FIG. 3.

When the user would like to search for and select a virtual padlock including the name, the names of input windows NAME#1, NAME#2, ..., NAME#N, and the like with an attached deletion button DEL are additionally displayed whenever the user pushes the name addition button NAME of FIG. 3. When the user inputs the name to a desired number of the name input windows and then pushes the search button SEARCH, the virtual padlock selection list screen which displays the virtual padlock list including the input name is displayed as shown in FIG. 4.

When the deletion button DEL is pushed, the name input windows NAME#1, NAME#2,...,NAME#N, and the like are deleted.

When the user pushes the selection button SEL corresponding to any one virtual padlock in the virtual padlock list including the name, the corresponding virtual padlock is selected. The user may also touch and select any one virtual padlock sample picture in the virtual padlock selection list screen without pushing the selection button SEL.

Here, after the user pushes the selection button SEL, the information providing server 130 may provide a selection/cancellation screen for rechecking whether the user makes a selection, may provide a chance for canceling the currently selected virtual padlock, and may display again the virtual padlock selection list screen when the user requests a cancellation. Although neither shown in the drawings nor described, the selection/cancellation screen will be easily understood by one of ordinary skill in the art and may be embodied in various forms.

As described above, when the user would like to search for and select the virtual padlock including the name, the information providing server 130 provides a payment screen to request payment for purchasing the corresponding virtual padlock after the user finally selects the virtual padlock. Although neither shown in the drawings nor described in the embodiment, the payment screen and a technology of interworking with a financial payment server managed by a financial institution for paid services using a general payment screen may be easily understood by one of ordinary skill in the art and may be diversely embodied.

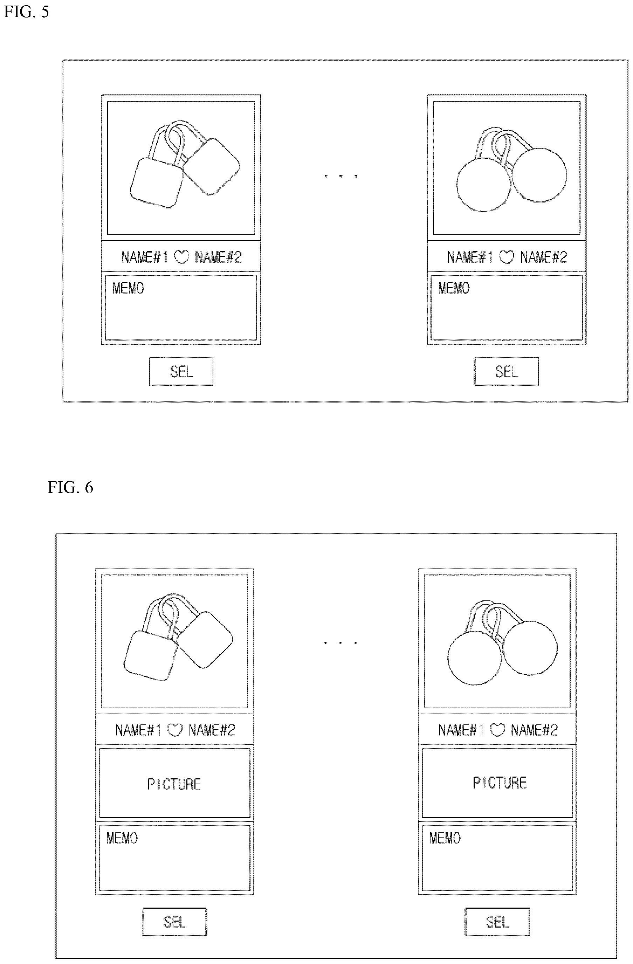

When the user would like to search for and select a virtual padlock including the name, the name input windows NAME#1, NAME#2, ..., NAME#N, and the like with an attached deletion button DEL are additionally displayed whenever the user pushes the name addition button NAME of FIG. 3. When the user pushes the memo button MEMO of FIG. 3, the memo input window with the deletion button DEL attached thereto is additionally displayed. When the user inputs the name to a desired number of the name input windows, inputs the memo in the memo input window, and then pushes the search button SEARCH, the virtual padlock selection list screen which displays the virtual padlock list including the input name and memo is displayed, as shown in FIG. 5.

When the user pushes the selection button SEL corresponding to any one virtual padlock in the virtual padlock list including the name and the memo, the corresponding virtual padlock is selected. The user may touch and select any one virtual padlock sample picture in the virtual padlock selection list screen without pushing the selection button SEL.

Here, after the user pushes the selection button SEL, the information providing server 130 may provide a selection/cancellation screen for rechecking whether the user makes a selection, may provide a chance for canceling the currently selected virtual padlock, and may display the virtual padlock selection list screen again, when the user requests a cancellation.

As described above, when the user would like to search for and select the virtual padlock including the name and the memo, the information providing server 130 provides a payment screen to request payment for purchasing the corresponding virtual padlock after the user finally selects the virtual padlock. Although neither shown in the drawings nor described in the embodiment, the payment screen and a technology of interworking with a financial payment server managed by a financial institution for paid services using a general payment screen may be easily understood by one of ordinary skill in the art and may be diversely embodied.

When the user would like to search for and select a virtual padlock including a name, a memo, and a picture, the name input windows NAME#1, NAME#2, ..., NAME#N, and the like with the deletion button DEL attached thereto are additionally displayed, whenever the user pushes the name addition button NAME of FIG. 3. When the memo button MEMO of FIG. 3 is pushed, the memo input window with the deletion button DEL attached thereto is additionally displayed. When the picture attachment button PICTURE of FIG. 3 is pushed, the picture attachment window with an attachment button ATT attached thereto to which a picture stored in the user terminal 110 is attachable is additionally displayed. When the user inputs the name to a desired number of name input windows, inputs the memo to the memo input window, inputs the picture (or a path for storing the picture) to the picture attachment window, and pushes the search button SEARCH, the virtual padlock selection list screen which displays the virtual padlock list including the name, the memo, and the picture which are input is displayed as shown in FIG. 6.

When the user pushes the selection button SEL corresponding to any one virtual padlock in the virtual padlock list including the name, the memo, and the picture, the corresponding virtual padlock is selected. The user may touch and select any one virtual padlock sample picture in the virtual padlock selection list screen without pushing the selection button SEL.

Here, after the user pushes the selection button SEL, the information providing server 130 may provide the selection/cancellation screen for rechecking whether the user makes a selection, may provide a chance for canceling the currently selected virtual padlock, and may display the virtual padlock selection list screen again, when the user requests a cancellation.

As described above, when the user would like to search for and select the virtual padlock including the name, the memo, and the picture, the information providing server 130 provides a payment screen to request payment for purchasing the corresponding virtual padlock after the user finally selects the virtual padlock. Although neither shown in the drawings nor described in the embodiment, the payment screen and a technology of interworking with a financial payment server managed by a financial institution for paid services using a general payment screen may be easily understood by one of ordinary skill in the art and may be diversely embodied.

As another embodiment different from the embodiments of FIGS. 3 to 6, the information providing server 130 first displays only sample pictures (2D or 3D pictures) of a padlock shown in FIGS. 4 to 6 as a virtual padlock search screen (not shown). After the user touches any one padlock sample picture on the search screen or pushes and selects the selection button displayed therewith, a virtual padlock selection request screen (not shown) which includes the name addition button NAME displaying the name input window as shown in FIG. 3, the memo button MEMO displaying the memo input window, the picture attachment button PICTURE displaying the picture attachment window, and a confirm button CONFIRM requesting completion of selection instead of the search button SEARCH of FIG. 3 is displayed. Any one of padlock sample pictures including any one padlock sample picture including a name shown in FIG. 4, any one padlock sample picture including a name and a memo shown in FIG. 5, and any one padlock sample picture including a name, a memo, and a picture shown in FIG. 6 may be shown to the user.

Here, after any one padlock sample picture is shown to the user as described above, the information providing server 130 may provide the user with the selection/cancellation screen for rechecking whether the user makes a selection, and provide the user a chance for canceling the currently selected virtual padlock. When the user requests a cancellation, the virtual padlock search screen (not shown) showing only the padlock sample pictures (2D or 3D pictures) as described above is displayed again.

Also, the information providing server 130 may provide a payment screen to request payment for purchasing the corresponding virtual padlock after the user lastly selects a virtual padlock. Although neither shown in the drawings nor described in the embodiment, the payment screen and a technology of interworking with a financial payment server managed by a financial institution for paid services using a general payment screen may be easily understood by one of ordinary skill in the art and may be diversely embodied.

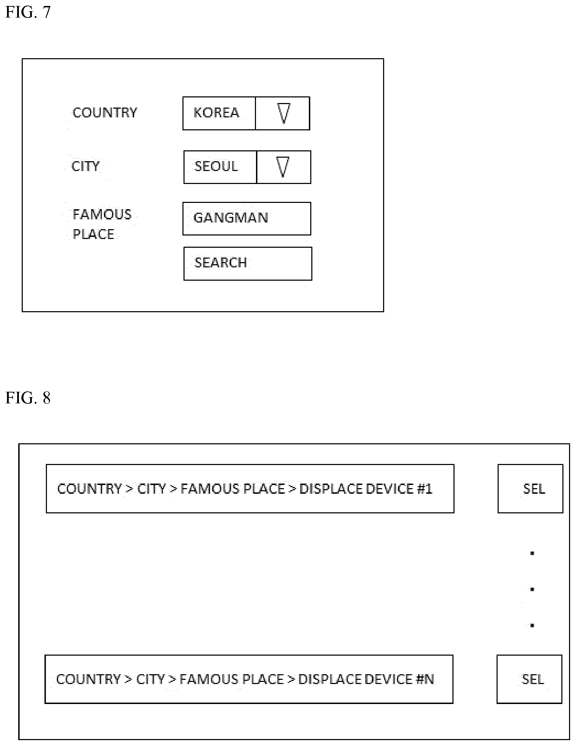

FIG. 7 illustrates a display device search screen as a first embodiment of a display device selection screen according to the present invention. The display device search screen includes a country selection window attached with an arrow search button for allowing the user to select a country, a city selection window with an arrow search button for allowing the user to select a city, a famous place input window for allowing the user to input the name of a famous place, and the search button SEARCH requesting a virtual padlock list.

FIG. 8 illustrates a display device selection list screen as a second embodiment of the display device selection screen according to the present invention. The display device selection list screen is displayed as a search result through the search screen of FIG. 7 and includes a display device list with the selection button SEL attached for allowing the user to select the display device 120.

The user may search for and select a famous place for each country or city through the search screen of FIG. 7 and may search for and select the display device 120 installed at the corresponding famous place or may search for and select the display device 120 installed at the corresponding famous place through a famous place search regardless of country or city.

In detail, the user may select any one of the countries provided by the information providing server 130 by pushing the arrow search button of the country selection window of FIG. 7 and may select any one of cities provided by the information providing server 130 by pushing the arrow search button of the city selection window of FIG. 7. When the name of a famous place is input into the famous place input window of FIG. 7 and the search button SEARCH is pushed, the display device selection list screen is displayed, showing a list of display devices #1 to #N installed at the famous place classified for each country or city as shown in FIG. 8.

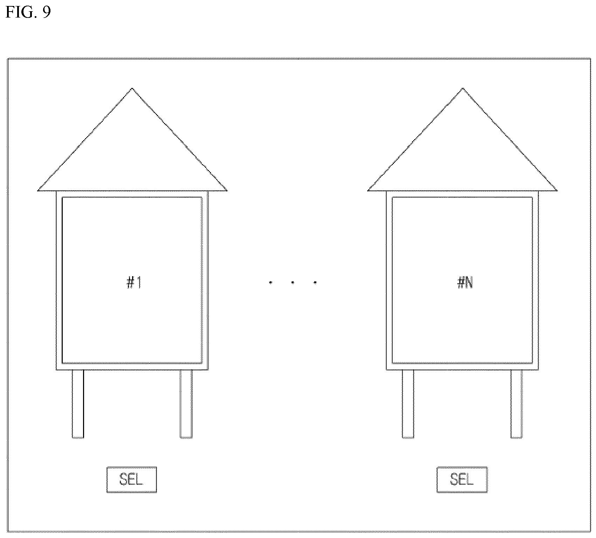

Although the display device selection list screen for designating the display devices installed at the famous place as numerals #1 to #N is shown in FIG. 8, a display device selection list screen showing display device sample pictures with the selection buttons SEL attached may be provided as a third example of the display device selection screen according to the present invention, as shown in FIG. 9. In FIG. 9, the user may touch and select the display device sample picture without pushing the selection button SEL.

Here, the display device sample picture preferably shows the display devices #1 to #N and surroundings together, and accordingly the user may feel a sense of realism and accordingly select a desired one of the display devices #1 to #N.

When the user pushes the selection button SEL corresponding to any one of the display devices #1 to #N in the list of the display devices #1 to #N installed at the famous place, the corresponding one of the display device #1 to #N is selected.

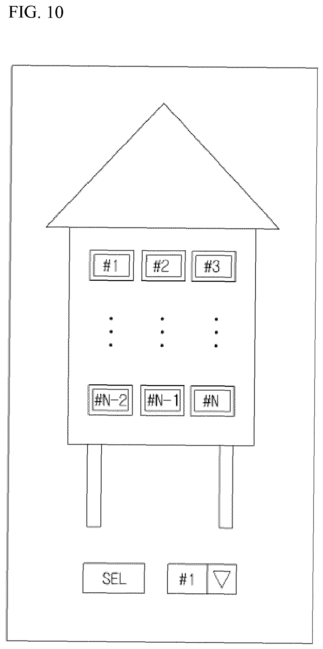

Meanwhile, FIG. 10 illustrates a display device selection list screen showing a sample picture of display devices in which a plurality of display devices #1 to #N installed at one famous place distinguished in rows and columns are shown as a fourth embodiment of a display device selection screen according to the present invention. The display device selection list screen includes an arrow search button and the selection button SEL for allowing the user to select any one of the plurality of display devices #1 to #N. In FIG. 10, the user may touch and select the display device sample picture without pushing the selection button SEL.

In this case, the user may select one of the numerals #1 to #N by pushing the arrow search button and select one of the display devices #1 to #N installed at a desired position among the plurality of display devices #1 to #N by pushing the selection button SEL.

As described above, after the user selects one of the display devices #1 to #N, the information providing server 130 may provide the selection/cancellation screen for rechecking whether the user makes a selection, may provide a chance for canceling the currently selected one of the display devices # to #N, and may display the display device selection list screen again, when the user requests a cancellation. Although neither shown in the drawings nor described, the selection/cancellation screen will be easily understood by one of ordinary skill in the art and may be embodied in various forms.

When the user searches for and selects the display device 120 installed at the corresponding famous place, the information providing server 130 may provide a payment screen to request payment for using the corresponding display device 120 when the user lastly select the display device 120. Although neither shown in the drawings nor described in the embodiment, the payment screen and a technology of interworking with a financial payment server managed by a financial institution for paid services using a general payment screen may be easily understood by one of ordinary skill in the art and may be diversely embodied.

Also, when the user selects one of the display devices #1 to #N installed at a desired position among the plurality of display devices #1 to #N installed at the famous place selected by the user distinguished in rows columns, the information providing server 130 may apply weighting depending on positions of the display devices # 1 to #N for payment.

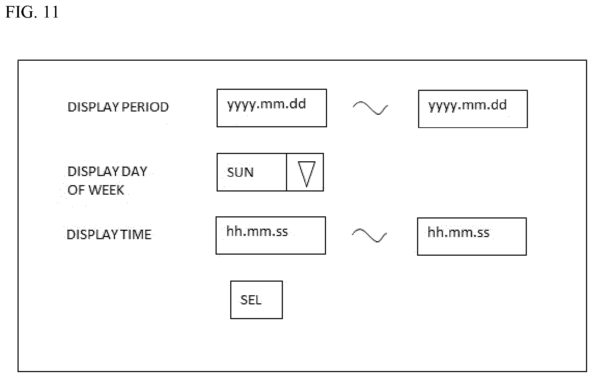

FIG. 11 illustrates an embodiment of a display condition selection screen according to the present invention which includes a display period selection window for allowing the user to select display period of a virtual padlock, a display day of the week with an attached arrow search button for allowing the user to select a display day of the week of the virtual padlock, a display time selection window for allowing the user to select display time of the virtual padlock, and a selection button SEL.

The user may select one or more of the display period, the display day of the week, and the display time through the selection screen of FIG. 11.

In detail, the user may input the display period by year, month, and day as units into the display period selection window of FIG. 11 and may select day of the week by pushing the arrow search button of the display day of the week selection window of FIG. 11. When the display time is input into the display time selection window of FIG. 11 with hour, minute, and second as units and then the selection button SEL is pushed, the display period, the display day of the week, or the display time is selected.

Here, after the user pushes the selection button SEL, the information providing server 130 may provide a selection/cancellation screen for rechecking whether the user makes a selection, may provide a chance for canceling the currently selected display period, display day of the week or the display time, and may display the display condition selection list screen again, when the user requests a cancellation. Although neither shown in the drawings nor described, the selection/cancellation screen will be easily understood by one of ordinary skill in the art and may be embodied in various forms.

As described above, when the user would like to select the display condition of the virtual padlock, the information providing server 130 may provide a payment screen to request payment for using the corresponding display condition after the user finally selects the display condition. Although neither shown in the drawings nor described in the embodiment, the payment screen and a technology of interworking with a financial payment server managed by a financial institution for paid services using a general payment screen may be easily understood by one of ordinary skill in the art and may be diversely embodied.

Also, as described above, a bill may be charged with weighting applied to a display condition selected by a user according to preference of users.

When the user selects the virtual padlock, the display device 120, and the display condition as described above, the information providing server 130 checks and stores the selected virtual padlock, display device 120, and display condition in the information providing DB 140 as user display information and transfers the user display information to the display management server 150.

After that, the display management server 150 checks the user display information transferred from the information providing server 130 and allows the virtual padlock selected by the user to be displayed on a screen of the display device 120 selected by the user according to the display condition selected by the user.

When the virtual padlock according to the embodiment of the present invention described above is used, a problem in which padlocks attached to a conventional padlock attachment place (for example, a fence, a post or the like for attaching padlocks) spoil the appearance of a corresponding famous place and become environmental pollutants may be completely solved. Particularly, a virtual padlock is displayed at not only famous places that a user has visited in person but also famous places that the user would like to visit or famous places whose planned date for visiting is determined, thereby allowing the user to reminisce or celebrate love or friendship of their own.

The virtual padlock providing system described above is not limited to the embodiments described above and may be diversely modified by one of ordinary skill in the art without departing from the essentials of the present invention including the technical concept defined by the following claims and equivalents thereof.

## Claims

1. A virtual padlock providing system comprising:
a user terminal 110 used as an input device for selecting a virtual padlock, a display device 120 displaying the virtual padlock, and a display condition for the virtual padlock;
the display device 120 installed at a famous place, selected by a user of the user terminal 110, and configured to display a virtual padlock selected by the user on a screen according to a display condition selected by the user;
an information providing server 130 capable of communicating with the user terminal 110 through a wired or wireless information communication network and determining the virtual padlock, the display device 120, and the display condition selected by the user through a virtual padlock selection screen, a display device selection screen, and a display condition selection screen to be user display information, storing the user display information in an information providing database (DB) 140 and transferring the user display information to a display management server 150 when a selection request or a correction request with respect to the padlock, the display device 120, and the display condition is received from the user terminal 110;
the information providing DB 140 in which one or more virtual padlocks provided through the virtual padlock selection screen and one or more display devices 120 provided through the display device selection screen are stored and the user display information is stored; and
the display management server 150 capable of communicating with the display device 120 or the information providing server 130 through a wired or wireless information communication network and allowing the virtual padlock selected by the user to be displayed on the screen of the display device 120 selected by the user according to the display condition selected by the user, when the user display information is received from the information providing server 130.

2. The virtual padlock providing system of claim 1, wherein the user terminal 110 is any one of a mobile communication device, a personal computer, and an unattended information terminal such as a kiosk.

3. The virtual padlock providing system of claim 1, wherein the virtual padlock selection screen is configured to search for and select a virtual padlock in a form including one or more of a name, a nickname, a memo, and a picture of the user.

4. The virtual padlock providing system of claim 1, wherein the display device selection screen is configured to search for a famous place for each country or city to search for and select the display device 120 installed at the corresponding famous place or to search for and select the display device 120 installed at a corresponding famous place through a search regardless of country or city.

5. The virtual padlock providing system of claim 1, wherein the display condition selection screen is configured to select one or more of a display period, a display day of the week, and a display time.

6. The virtual padlock providing system of claim 1, wherein when a plurality of display devices #1 to #N distinguished by rows and columns are installed at a famous place selected by the user, the information providing server 130 allows the user to select one of the display devices #1 to #N installed at a preferred position among the plurality of display devices #1 to #N through the display device selection screen.

7. The virtual padlock providing system of claim 1, wherein the information providing server 130 displays a sample picture showing the display devices #1 to #N and surroundings thereof together on the display device selection screen to allow the user to select one of the display devices #1 to #N while checking the surroundings.
